# FASCICULE DE BREVET EUROPEEN

(11) **EP 2 537 620 B1**
(45) Date de publication et mention de la délivrance du brevet: **06.03.2019**
(21) Numéro de dépôt: 12166389.2
(22) Date de dépôt: 02.05.2012
(51) Int. Cl.: B23K 9/095, B23K 9/16, B23K 9/32

(54) **Dispositif et procédé de soudage à l'arc mettant en oeuvre un accéléromètre triaxial**
Vorrichtung und Verfahren zum Lichtbogenschweißen unter Einsatz eines dreiachsigen Beschleunigungsmessers
Device for and method of arc welding implementing a triaxial accelerometer

(30) Priorité: 23.06.2011 FR 1155528
(43) Date de publication de la demande: 26.12.2012
(73) Titulaire: AIR LIQUIDE WELDING FRANCE, 75007 Paris (FR)
(72) Inventeur: Ehrhart, Gilles, 95310 Saint Ouen L'Aumône (FR); Plottier, Gérard, 95460 Ezanville (FR)
(74) Mandataire: Grosse Schumacher Knauer von Hirschhausen

(56) Documents cités:
- JP-A- 2003 071 564
- JP-A- 2010 162 568
- JP-A- 2011 167 757
- KR-A- 20090 111 556
- US-A1- 2009 298 024

## Description

L'invention porte sur un dispositif de soudage et un procédé de suivi d'une opération de soudage à l'arc conformément au préambule des revendications 1 et 9 (voir, par exemple, JP-A-2010162568), en utilisant un accéléromètre triaxial pour déterminer la vitesse de soudage et l'énergie linéaire de soudage en temps réel.

L'énergie linéaire de soudage moyenne sur un temps δt est définie par la formule E(t) = U(t) x I(t) / V(t), où U est la tension de soudage, I est le courant de soudage et V est la vitesse d'avance du soudage.

Si l'on est capable de mesurer U et I sans trop de difficulté, grâce au générateur de courant de soudage ou à un module externe, la vitesse de soudage est en général déterminée par le rapport de la longueur soudée sur le temps de soudage.

Cependant, mesurer ainsi la vitesse de soudage présente un inconvénient majeur, à savoir la mesure du temps de soudage et du cordon après soudage, ne permettent de donner qu'une moyenne de la vitesse de soudage.

En effet, le soudeur peut très bien commencer par souder très vite puis ralentir donnant ainsi une valeur moyenne tout à fait acceptable alors qu'en réalité, les différentes parties de l'assemblage n'auront pas connu les mêmes cycles thermiques amenant à des hétérogénéités du point de vue des propriétés mécaniques, donc à des portions de cordon correctement soudées mais également, à l'inverse, à des portions de cordons présentant des caractéristiques insuffisantes.

Il est en fait très difficile d'avoir un contrôle précis de l'ensemble des pièces soudées d'une structure garantissant l'homogénéité des propriétés mécaniques en utilisant un calcul basé sur la moyenne de la vitesse de soudage.

Le document JP-A-2008080343 décrit un système de mesure du déplacement d'une torche de soudage sur un robot à l'aide d'accéléromètre pour assurer un contrôle du mouvement oscillatoire de la tête de soudage et ainsi vérifier que le déplacement est bien conforme à la consigne.

Le document EP-A-1812200 propose une torche de soudage munie d'un système de capteur permettant de mesurer la position de la torche pendant le soudage, notamment un capteur de type accéléromètre pour pouvoir mesurer les accélérations et la vitesse de déplacement.

Le document US-A-2009/0298024 divulgue une torche de soudage comprenant un dispositif de détection, notamment du type accéléromètre, de la position angulaire de la torche par rapport à la pièce à souder.

Le document JP-A-2003071564 propose de calculer l'énergie linéaire de soudage à partir de la détection de la tension de soudage, du courant de soudage et de la longueur de soudage.

Le document JP-A-2010162568 décrit un dispositif de soudage comprenant une torche de soudage et des moyens de calcul de la vitesse de déplacement de ladite torche à partir desquels l'énergie linéaire de soudage est calculée.

Toutefois, aucun de ces documents ne propose une solution pour maîtriser l'énergie linéaire de soudage en tant réel, notamment de manière quasi instantanée, et permettre d'adapter le procédé de soudage en fonction de l'énergie ainsi déterminée en temps réel.

Le problème qui se pose est dès lors de proposer un dispositif et un procédé de soudage permettant à un opérateur de déterminer et donc de connaître l'énergie linéaire de soudage en temps réel, notamment de manière quasi instantanée, ainsi que la vitesse instantanée de soudage, la récupération des données lors de l'opération de soudage étant déclenchée automatiquement à partir du signal d'intensité et/ou de tension.

La solution de l'invention est alors un dispositif de soudage défini dans la revendication 1, comprenant :
- une torche de soudage à l'arc,
- un accéléromètre triaxial (X, Y, Z) apte à et conçu pour fournir au moins un signal fonction de l'accélération de la torche suivant chaque axe,
- des moyens d'amplification de signal aptes à et conçus pour amplifier le signal de courant fourni par l'accéléromètre triaxial,
- des moyens de traitement de signal aptes à et conçus pour traiter le signal de courant amplifié et pour en déduire des valeurs d'accélération subies par l'accéléromètre triaxal suivant chaque axe,
- des moyens d'intégration permettant d'opérer une intégration, durant une période de temps donnée, desdites valeurs d'accélération et d'en déduire au moins une valeur de vitesse de déplacement de la torche de soudage, et
- des moyens de calcul permettant de calculer l'énergie linéaire de soudage à partir de la ou des valeurs de vitesse de déplacement de la torche mesurées sur la période de temps donnée.

Selon le cas, le dispositif de l'invention peut comprendre l'une ou plusieurs des caractéristiques techniques suivantes :
- il comporte des moyens de visualisation permettant de visualiser l'énergie de soudage calculée par les moyens de calcul.
- il comporte des moyens d'amplification de signal aptes à et conçus pour amplifier le signal de courant fourni par l'accéléromètre triaxial et à le linéariser,
- la torche de soudage est une torche de type MIG/MAG, TIG ou plasma ou de type à électrode enrobée.
- l'accéléromètre triaxial est intégré ou agencé sur la torche.
- l'accéléromètre triaxial est intégré ou agencé sur une pince de soudage.
- l'accéléromètre triaxial est fixé à la torche ou à la pince au moyen d'un système à bague de fixation.
- il comporte un générateur de courant de soudage et les moyens d'amplification de signal, les moyens de traitement de signal, les moyens d'intégration et les moyens de calcul sont agencés dans ledit générateur ou dans un module externe audit générateur.
- les moyens d'amplification de signal, les moyens de traitement de signal, les moyens d'intégration et les moyens de calcul comprennent un temps d'intégration de la moyenne glissante réglable, des seuils d'alarme réglables, un temps hors plage réglable, une sortie des signaux sous forme analogique ou numérique pour permettre un suivi de traçabilité de production.

Par ailleurs, l'invention concerne aussi un procédé de suivi d'une opération de soudage à l'arc tel que défini dans la revendication 9, comprenant les étapes suivantes :
a) commencer à souder au moins une pièce métallique au moyen de la torche,
b) récupérer au moins un signal fonction de l'accélération de la torche suivant chaque axe au moyen d'un accéléromètre triaxial (X, Y, Z),
c) amplifier le signal de courant fourni par l'accéléromètre triaxial,
d) traiter le signal de courant amplifié pour en déduire des valeurs d'accélération subies par l'accéléromètre triaxal suivant chaque axe (X, Y, Z),
e) intégrer, durant une période de temps donnée, les valeurs d'accélération et en déduire au moins une valeur de vitesse de déplacement de la torche de soudage, et
f) calculer l'énergie linéaire de soudage à partir de la ou des valeurs de vitesse de déplacement de la torche mesurées sur la période de temps donnée.

Selon le cas, le procédé de l'invention peut comprendre l'une ou plusieurs des caractéristiques techniques suivantes :
- à l'étape c), on amplifie et on linéarise le signal de courant fourni par l'accéléromètre triaxial.
- il comprend une étape de visualisation et/ou d'affichage de l'énergie de soudage calculée à l'étape f) ou de la vitesse de déplacement de la torche de soudage déterminée à l'étape e).
- il comprend une étape d'avertir l'opérateur lorsque l'énergie de soudage calculée à l'étape f) ou la vitesse de déplacement de la torche déterminée à l'étape e) différent de valeurs de consigne préfixées.

L'invention va être mieux comprise grâce à la description détaillée suivante faite en références aux figures annexées parmi lesquelles :
- les Figures 1A et 1B sont des schémas de torches de soudage manuel MIG équipées d'un accéléromètre selon la présente invention.
- les Figures 2A et 2B schématisent des enregistrements du déplacement d'une torche dans l'espace.
- la Figure 3 représente l'influence de la vitesse instantanée sur l'énergie de soudage.
- la Figure 4 représente l'enregistrement des données de soudage lors de la réalisation du cordon de la figure 3 avec une variation de vitesse de soudage.
- la Figure 5 illustre l'influence des variations de la vitesse de soudage sur l'énergie de soudage.
- la Figure 6 illustre le traitement graphique du signal et permet la localisation des zones soudées ne respectant pas la bonne énergie de soudage.
- la Figure 7 représente un enregistrement en procédé MIG/MAG avec modification de la distance tube contact-pièce en cours de soudage pour une même vitesse de soudage.
- la Figure 8 représente un enregistrement en procédé MIG/MAG avec modification de la distance tube contact-pièce en cours de soudage et asservissement de la vitesse de soudage pour garantir la consigne en énergie de soudage désirée.
- et la Figure 9 représente un enregistrement d'une opération de soudage respectant les consignes.

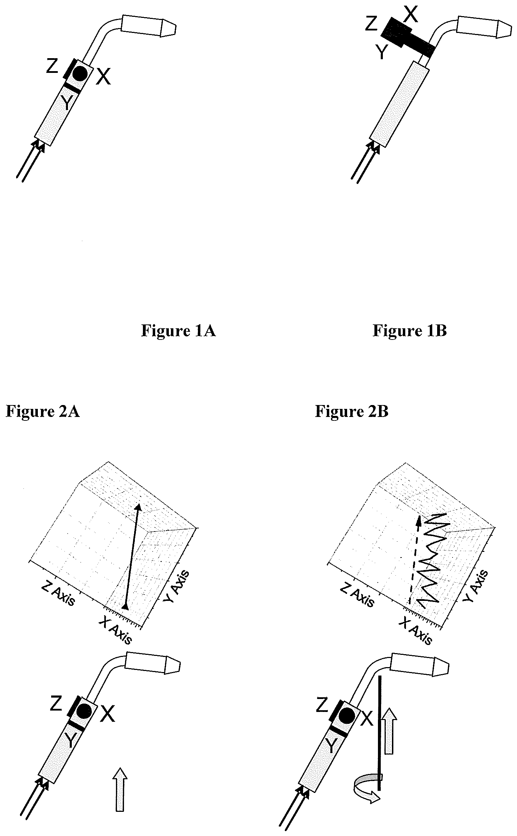

Les Figures 1A et 1B présentent des modes de réalisation possibles d'une torche de soudage MIG à accéléromètre triaxal selon l'invention, selon lesquels l'accéléromètre est soit intégré à la torche (Fig 1A), soit fixé à l'extérieur de la torche (Fig. 1B). Il est à noter que la torche peut être indifféremment une torche de soudage manuel ou automatique pour procédé MIG, TIG, MMA ou plasma.

Dans tous les cas, la torche est équipée d'un accéléromètre triaxial (X, Y, Z) afin de déterminer de manière quasi instantanée le déplacement de la torche et par conséquent la vitesse de soudage, et de permettre ensuite de déterminer l'énergie linéaire de soudage en temps réel.

En effet, ce type de capteur ou accéléromètre triaxal permet de fournir un signal proportionnel à l'accélération qu'il subit suivant chaque axe (X, Y, Z), ce signal étant ensuite amplifié par des moyens d'amplification, par exemple grâce à l'utilisation d'un conditionneur de signal, par exemple un conditionneur Kistler type 5134B, puis traité par des moyens de traitement de signal, par exemple par une moyenne glissante sur une période δt définie au préalable par l'opérateur, afin d'en déduire les accélérations subies par le capteur suivant chaque axe, la vitesse et le déplacement pendant une opération de soudage.

L'intégration suivant le temps, c'est-à-dire pendant une période de temps donnée, de ces valeurs d'accélération permet de déterminer le (ou les) vecteur vitesse décrivant le (ou les) déplacement du capteur dans l'espace et, par conséquent, de déterminer également la vitesse de déplacement de la torche de soudage.

En combinant ces valeurs de vitesse de déplacement aux paramètres de soudage, à savoir la tension et l'intensité, mesurés sur la même période d'intégration que l'on peut calculer l'énergie linéaire de soudage en temps réel.

Dans ce cas, il est alors possible de visualiser de manière continue si le soudeur respecte bien l'énergie de soudage imposée par la procédure en tout point de l'assemblage.

Grâce à la mesure du déplacement de la torche et au calcul de l'énergie linéaire de soudage, il est également possible d'obtenir un graphique permettant de visualiser le non respect des consignes de soudage en fonction de la distance parcourue sur l'assemblage, permettant ainsi une identification immédiate des zones présentant un défaut de procédure.

Le système de mesure de l'énergie linéaire de soudage comprend donc l'accéléromètre mesurant le déplacement, lequel est préférentiellement soit directement intégré directement à la torche de soudage lorsque la torche est de type MIG/MAG, TIG ou plasma (Fig. 1A), soit à la pince de soudage lorsque la torche est de type à électrode enrobée, soit encore ajouté à la torche ou à la pince grâce à un système de bague de fixation (Figure 1B).

L'accéléromètre est directement relié à un générateur disposant de l'interface adaptée au calcul de la trajectoire de la torche et donc de sa vitesse de déplacement.

Un système de mesure intégré au générateur peut alors restituer, via un afficheur de temps de soudage ou un fichier informatique de données, les mesures de courant, de tension, de puissance (U(t).I(t)), de vitesse de soudage et d'énergie de soudage en lecture continue.

La valeur d'énergie de soudage est calculée en moyennant la puissance et la vitesse de soudage sur des périodes de temps à définir en fonction de l'application, c'est-à-dire le procédé de soudage, le type de pièce à souder, la géométrie de la pièce et la trajectoire du cordon.

Cette moyenne est obtenue à partir d'un échantillonnage de données dont la fréquence dépend de la dynamique du générateur de soudage utilisé. Typiquement, la fréquence peut varier de1 kHz à 10 kHz en fonction du type de générateur de courant de soudage utilisé.

Dans le cas où le générateur ne serait pas équipé pour traiter directement ces informations, l'ensemble des mesures peut être renvoyé sur un module externe, via la mesure d'intensité grâce à un capteur fonctionnant par exemple par effet Hall, la mesure de déplacement grâce à l'accéléromètre et la mesure de tension directement prise sur le générateur avec ou non une mesure de compensation intégré au module afin de permettre l'utilisation de ce même générateur avec différente torche ou pince de soudage (longueur de câble, nature de torche,...). La compensation consistant à tenir compte des chutes de tension dans les câbles entre l'arc électrique et le point de mesure.

La plage d'énergie de soudage définie dans la procédure de soudage est renseignée dans l'appareil, lequel indique alors au soudeur via une alarme, tel un avertisseur sonore et/ou visuel, lorsque la plage d'énergie de soudage n'est pas respectée. Par exemple, l'alarme peut comprendre un voyant lumineux s'allumant sur le générateur, sur le module ou dans le casque de soudage par exemple. De même, l'alarme peut émettre un son et/ou une lumière spécifiques aux limites haute et basse de la plage d'énergie de soudage définie.

De façon générale, en collectant en temps réelle les déplacements de la torche de soudage à l'aide de l'accéléromètre placé sur cette dernière, on peut déterminer aisément la vitesse de soudage en temps réel. Cette vitesse couplée à la mesure des paramètres de soudage U(t) et I(t), en temps réel, permet de suivre sur un enregistrement l'énergie de soudage en fonction du temps, de manière à vérifier la conformité de l'assemblage en tout point de celui-ci.

Les Figures 2A et 2B schématisent des enregistrements selon les 3 axes x, y et z du déplacement d'une torche dans l'espace en fonction des mouvements qui lui sont imprimés. En Figure 2A, il s'agit d'une translation simple dans l'espace, alors qu'en Figure 2B il s'agit d'une translation simple dans l'espace accompagnée d'un mouvement oscillatoire de la torche perpendiculaire à la translation.

Suivant la géométrie de l'assemblage et la position de soudage, le soudeur peut être amené à observer une trajectoire plutôt rectiligne (Fig. 2A) ou en balayage (Fig. 2B). Dans tous les cas, l'intégration du mouvement opéré par le soudeur amènera à la mesure d'une vitesse de soudage suivant l'axe principal de déplacement comme montré sur les Figures 2A et 2B.

La solution de l'invention peut également s'intégrer à un système de boucle de contrôle du procédé de soudage. En effet, que ce soit en soudage manuel ou automatique, si la géométrie de l'assemblage oblige le soudeur à modifier la longueur de la distance tube contact-pièce, cela va avoir pour conséquence de modifier ses paramètres électriques de soudage.

Ainsi, dans le cas du soudage TIG, plasma et électrode enrobée, cela impliquera une augmentation ou une diminution de la tension d'arc à intensité constante, alors que, dans le cas du soudage MIG/MAG, cela impliquera une augmentation ou une diminution de l'intensité de soudage à tension constante,

Dans tous ces cas, la mesure en directe de l'énergie de soudage permet d'indiquer au soudeur ou à la machine de soudage automatique que sa vitesse de soudage doit soit diminuer, soit augmenter si l'on souhaite que la plage d'énergie de soudage soit respectée.

Les exemples de réalisation suivants permettront de mieux comprendre l'invention.

Un assemblage de 46 cm de long a été réalisé par soudage manuel avec une torche de type PROMIG 441W de la société Air Liquide Welding. Compte tenu des caractéristiques techniques du matériau à souder, c'est-à-dire des propriétés mécaniques et de la tenue à la fatigue, une énergie de soudage comprise entre 15 et 20 kJ/cm doit être respectée.

Selon l'art antérieur, le soudeur commence à souder l'assemblage mais se rend compte au bout d'une minute qu'il ne va pas assez vite, il décide alors d'accélérer afin de rattraper son retard. Il finit donc par souder son assemblage en 2 min lui donnant ainsi une énergie moyenne de soudage de 17.6 kJ/cm.

Après soudage, le soudeur indique sur son compte rendu de soudage que la passe a été réalisée en 2 min pour une longueur totale de 46 cm, faisant ainsi une vitesse de soudage moyenne de 23 cm/min et une énergie linéaire de soudage de 17.6 kJ/cm (U=27V, I=250A) comme spécifié sur la procédure de soudage.

Toutefois, si on s'intéresse d'un peu plus prêt à la passe, on comprend immédiatement le problème qui se pose puisqu'on se rend compte que la première partie a été soudée avec une vitesse de soudage de 18 cm/min, donnant une énergie de 22.5 kJ/cm qui est beaucoup trop élevée, alors que la seconde partie a, quant à elle, été soudée à 28 cm/min, correspondant à une énergie de 14.5 kJ/cm qui est beaucoup trop faible.

Selon l'art antérieur, une passe de soudage peut être considérée comme conforme à la procédure alors qu'en réalité, l'ensemble du joint est non conforme.

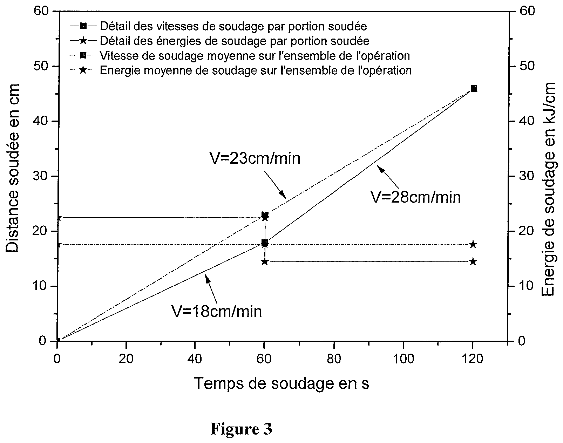

La figure 3 illustre bien ce cas. On y a représenté l'influence de la vitesse instantanée sur l'énergie de soudage lors de la réalisation d'un cordon alors que la longueur soudée et le temps de soudage sont identiques.

Plus précisément, le trait en pointillé qui représente une opération de soudage effectuée à une vitesse constante, en l'occurrence 23 cm/min, permet bien de respecter la plage d'énergie de soudage avec une énergie constante à 17.6 kJ/cm. La courbe en trait plein illustre, quant à elle, le fait que si le soudeur commence son assemblage à une vitesse de 18 cm/min puis accélère à 28 cm/min pour rattraper son retard, cela revient au même que s'il avait soudé son assemblage à une vitesse moyenne de 23 cm/min. Or, bien que cette moyenne donne une valeur d'énergie de soudage de 17.6 kJ/cm qui est tout à fait acceptable, la réalité est qu'il aura soudé la première partie de son assemblage avec une énergie de trop forte de 22.5 kJ/cm et la deuxième partie avec une vitesse trop faible de 14.5 kJ/cm.

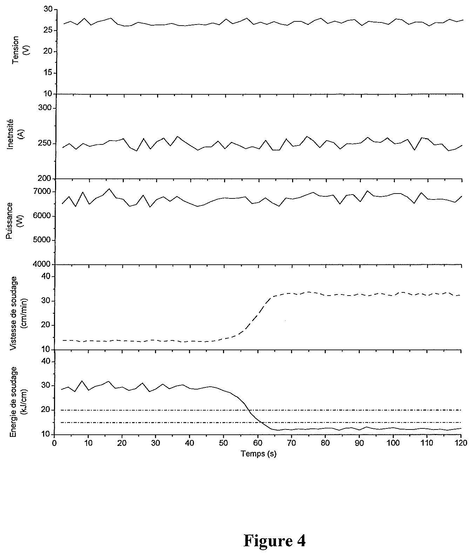

Par ailleurs, la Figure 4 représente un exemple d'un enregistrement des données de soudage sur lequel on peut voir que la plage d'énergie de soudage donnée en consigne n'a pas bien été respectée. Dit autrement, on y a représenté l'enregistrement des données de soudage (U, I, V, énergie de soudage) lors de la réalisation du cordon de la Figure 3 avec une variation de vitesse de soudage.

En effet, on peut voir très nettement sur la dernière ligne du graphique que la première partie de l'opération s'effectue avec une énergie de soudage trop élevée (gamme acceptable en pointillée sur le graphique) alors que la deuxième partie s'effectue quant à elle avec une énergie de soudage trop faible.

On comprend que la quasi totalité du joint a été réalisée en dehors des consignes, ce qui peut se traduire par des propriétés mécaniques non conformes aux normes en applications.

Grâce à la mise en oeuvre de la présente invention, on peut, dès le début, signaler au soudeur via un système d'avertissement, qu'il ne respecte pas les consignes d'énergie de soudage et lui permet alors de corriger sa manière de faire de sorte de réaliser finalement le joint dans de bonnes conditions.

Par ailleurs, pour des raisons de géométrie ou d'accessibilité de la pièce à souder, le soudeur peut être amené à souder dans des conditions où il manque de repère pour savoir si sa vitesse de soudage est adaptée ou non aux consignes. Dans ces conditions, le soudeur a parfois tendance à faire varier sa vitesse de soudage sans pouvoir évaluer l'impact que cela a sur l'énergie de soudage.

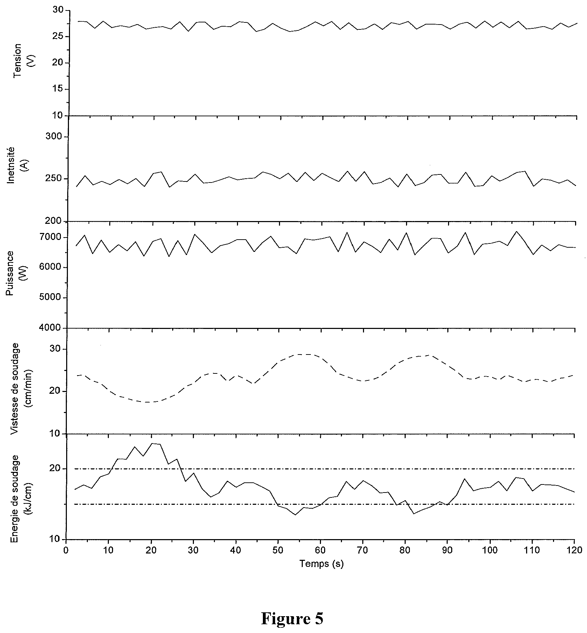

La Figure 5 illustre ce cas avec des changements de vitesse de soudage qui amènent à observer des zones où la consigne en énergie de soudage n'a pas été respectée. La présente invention permet au soudeur d'avoir ces repères et donc d'éviter d'avoir des variations d'énergie de soudage trop importantes.

La figure 5 présente les enregistrements des différents paramètres de soudage que sont la tension, l'intensité et la vitesse de soudage, pendant une opération de soudage. La tension et l'intensité permettent de connaître la puissance développée en cours de soudage qui couplée avec la vitesse donne l'énergie de soudage. On constate que, même si les paramètres de soudage U et I sont constants, des variations de vitesse de soudage induisent des variations d'énergie de soudage. Ainsi, on peut voir des portions de l'assemblage qui ne respectent les consignes en énergie de soudage. Ceci peut être évité dès lors que le soudeur a connaissance de ces variations en direct.

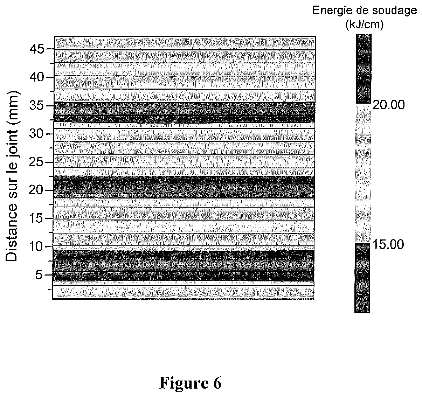

La Figure 6 présente un graphique obtenu après traitement des données enregistrées et permettant la localisation sur l'assemblage des zones où les consignes de soudage (dans ce cas l'énergie linéaire de soudage) n'ont pas été respectées. Sur ce graphique, il est ainsi possible de visualiser les zones sombres qui ne respectent pas les consignes de soudage (en dehors de la plage 15-20 kJ/cm) sur la longueur d'un assemblage. Ainsi, on peut dire qu'entre 4 et 9 cm, entre 19 et 22 cm et qu'entre 32 et 36 cm, l'assemblage ne respecte pas les consignes de soudage et peut présenter des hétérogénéités de structure pouvant amener à une dégradation de ses propriétés.

En outre, si la géométrie de la pièce à souder implique un changement de distance tube contact-pièce en cours de soudage, le système de l'invention peut prévenir de la nécessité de modifier la vitesse de soudage afin de respecter les consignes d'énergie de soudage.

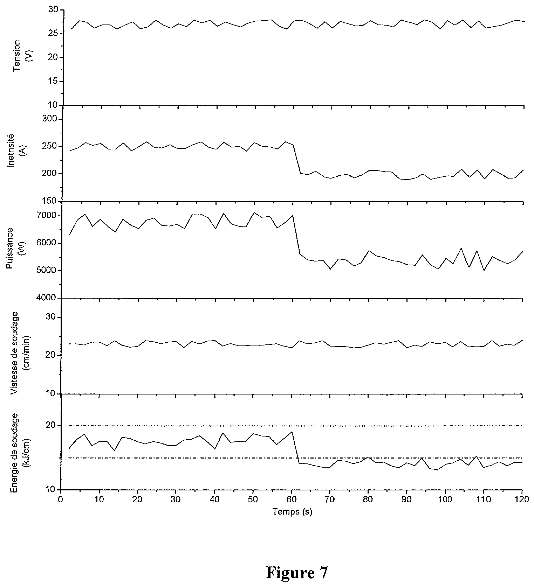

Ainsi, la Figure 7 illustre un enregistrement des paramètres de soudage avec une augmentation de la distance tube contact-pièce en cours de soudage qui se traduit par une diminution de l'intensité nécessaire à faire fondre le fil. Il est facile de constater que ce changement de géométrie a pour conséquence un non respect des consignes d'énergie de soudage dans la deuxième partie de l'assemblage.

Le contrôle continu de cette énergie grâce au dispositif de l'invention permet dans le cas d'une opération manuelle d'indiquer au soudeur qu'il doit diminuer sa vitesse de soudage s'il veut respecter la consigne d'énergie de soudage.

Dans le cas d'un soudage automatique, le système de l'invention permettrait un auto-contrôle ayant pour effet de modifier automatiquement la vitesse de soudage afin toujours de respecter la consigne d'énergie de soudage.

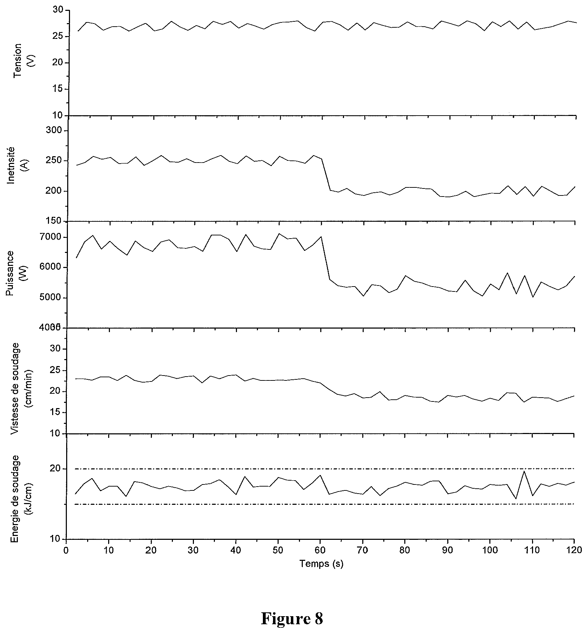

La figure 8 illustre le changement de vitesse de soudage afin de respecter cette consigne. En effet, sur cet enregistrement, on peut voir qu'à partir de 60 sec, l'intensité de soudage diminue (ceci peut être provoqué par une diminution de la vitesse d'avance du fil ou par une augmentation de la distance tube contact-pièce, par exemple), ce qui a pour conséquence directe de diminuer l'énergie de soudage. Or, cette dernière peut être maintenue à sa valeur de consigne à partir du moment où cette diminution d'intensité de soudage est compensée par diminution proportionnellement calculée de la vitesse de soudage. La figure 8 illustre bien cette diminution de la vitesse de soudage à partir de 60 sec, qui permet au système de garder une énergie de soudage conforme aux consignes.

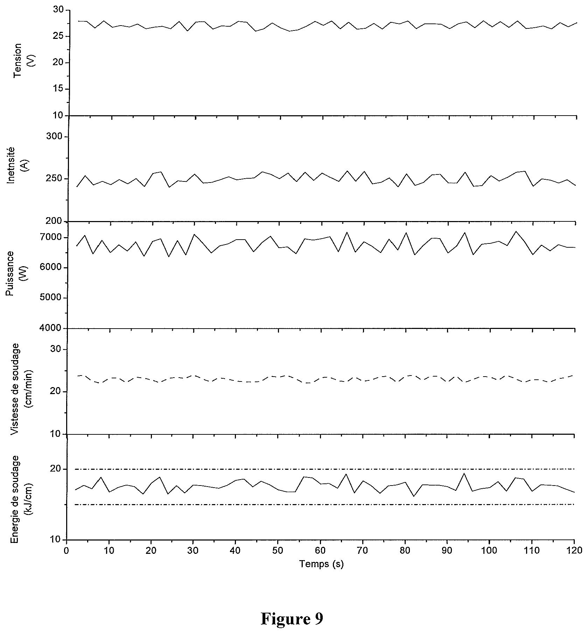

Enfin, dans le cas où l'opération de soudage est réalisée dans le respect des consignes, l'enregistrement des paramètres tension, intensité, vitesse de soudage et énergie de soudage permettront de vérifier que l'assemblage a bien été réalisé suivant les consignes comme l'illustre la figure 9. La figure 9 montre un enregistrement de l'ensemble de ces paramètres pendant une durée d'opération de 120 sec. Dans ce cas, aucune variation de tension ou d'intensité n'a été observée pendant l'opération et que la maîtrise de la vitesse de soudage a permis de respecter la consigne d'énergie de soudage comme le montre bien le dernier graphique de la figure. Dans ce cas, on peut s'attendre a obtenir un assemblage homogène en structure et propriétés mécaniques.

## Revendications

1. Dispositif de soudage comprenant :
- une torche de soudage à l'arc, et
- des moyens de calcul permettant de calculer l'énergie linéaire de soudage à partir d'au moins une valeur de vitesse de déplacement de la torche mesurées sur une période de temps donnée,
**caractérisé en ce qu'**il comprend en outre :
- un accéléromètre triaxial (X, Y, Z) apte à et conçu pour fournir au moins un signal fonction de l'accélération de la torche suivant chaque axe,
- des moyens d'amplification de signal aptes à et conçus pour amplifier le signal de courant fourni par l'accéléromètre triaxial,
- des moyens de traitement de signal aptes à et conçus pour traiter le signal de courant amplifié et pour en déduire des valeurs d'accélération subies par l'accéléromètre triaxal suivant chaque axe, et
- des moyens d'intégration permettant d'opérer une intégration, durant ladite période de temps donnée, desdites valeurs d'accélération et d'en déduire ladite au moins une valeur de vitesse de déplacement de la torche de soudage.

2. Dispositif selon la revendication 1, **caractérisé en ce qu'**il comporte des moyens de visualisation permettant de visualiser l'énergie de soudage calculée par les moyens de calcul.

3. Dispositif selon l'une des revendications précédentes, **caractérisé en ce que** la torche de soudage est une torche de type MIG/MAG, TIG ou plasma ou de type à électrode enrobée.

4. Dispositif selon l'une des revendications précédentes, **caractérisé en ce que** l'accéléromètre triaxial est intégré ou agencé sur la torche.

5. Dispositif selon l'une des revendications 1 à 3, **caractérisé en ce que** l'accéléromètre triaxial est intégré ou agencé sur une pince de soudage.

6. Dispositif selon l'une des revendications précédentes, **caractérisé en ce que** l'accéléromètre triaxial est fixé à la torche ou à la pince au moyen d'un système à bague de fixation.

7. Dispositif selon l'une des revendications précédentes, **caractérisé en ce qu'**il comporte un générateur de courant de soudage et les moyens d'amplification de signal, les moyens de traitement de signal, les moyens d'intégration et les moyens de calcul sont agencés dans ledit générateur ou dans un module externe audit générateur.

8. Dispositif selon l'une des revendications précédentes, **caractérisé en ce que** les moyens d'amplification de signal sont aptes à et conçus pour amplifier et linéariser le signal de courant fourni par l'accéléromètre triaxial.

9. Procédé de suivi d'une opération de soudage à l'arc au moyen d'une torche de soudage à l'arc et d'un générateur de courant de soudage alimentant ladite torche en courant, dans lequel on procède selon les étapes de :
a) commencer à souder au moins une pièce métallique au moyen de la torche,
b) calculer l'énergie linéaire de soudage à partir d'au moins une valeur de vitesse de déplacement de la torche mesurée sur une période de temps donnée,
**caractérisé en ce que** préalablement à l'étape b), on procède en outre selon les étapes de :
c) récupérer au moins un signal fonction de l'accélération de la torche suivant chaque axe au moyen d'un accéléromètre triaxial (X, Y, Z),
d) amplifier le signal de courant fourni par l'accéléromètre triaxial,
e) traiter le signal de courant amplifié pour en déduire des valeurs d'accélération subies par l'accéléromètre triaxal suivant chaque axe (X, Y, Z),
f) intégrer, durant ladite période de temps donnée, les valeurs d'accélération et en déduire ladite au moins une valeur de vitesse de déplacement de la torche de soudage.

10. Procédé selon la revendication 9, **caractérisé en ce qu'**il comprend une étape de visualisation et/ou d'affichage de l'énergie de soudage calculée à l'étape f) ou de la vitesse de déplacement de la torche de soudage déterminée à l'étape e).

11. Procédé selon l'une des revendications 9 ou 10, **caractérisé en ce qu'**il comprend une étape d'avertir l'opérateur lorsque l'énergie de soudage calculée à l'étape f) ou la vitesse de déplacement de la torche déterminée à l'étape e) différent de valeurs de consigne préfixées.

12. Procédé selon l'une des revendications 9 à 11, **caractérisé en ce qu'**à l'étape c), on amplifie et on linéarise le signal de courant fourni par l'accéléromètre triaxial.

## Patentansprüche

1. Vorrichtung zum Schweißen, umfassend:
- einen Lichtbogenschweissbrenner und
- Berechnungsmittel, die ermöglichen, die lineare Schweißenergie aus mindestens einem Wert der Verschiebungsgeschwindigkeit des Brenners zu berechnen, der über einen bestimmten Zeitraum gemessen wird,
**dadurch gekennzeichnet, dass** sie ferner aufweist:
- einen dreiachsigen Beschleunigungsmesser (X, Y, Z), der geeignet und ausgelegt ist, um in Abhängigkeit von der Beschleunigung des Brenners entlang jeder Achse mindestens ein Signal abzugeben,
- Signalverstärkungsmittel, die geeignet und ausgelegt sind, um das Stromsignal zu verstärken, das von dem dreiachsigen Beschleunigungsmesser abgegeben wird,
- Signalverarbeitungsmittel, die geeignet und ausgelegt sind, um das verstärkte Stromsignal zu verarbeiten und um daraus Beschleunigungswerte abzuleiten, die der dreiachsige Beschleunigungsmesser entlang jeder Achse erfährt, und
- Integrationsmittel, die ermöglichen, eine Integration der Beschleunigungswerte während des bestimmten Zeitraums vorzunehmen und daraus mindestens einen Wert der Verschiebungsgeschwindigkeit des Schweißbrenners abzuleiten.

2. Vorrichtung nach Anspruch 1, **dadurch gekennzeichnet, dass** sie Anzeigemittel aufweist, die ermöglichen, die Schweißenergie anzuzeigen, die von den Berechnungsmitteln berechnet wird.

3. Vorrichtung nach einem der vorhergehenden Ansprüche, **dadurch gekennzeichnet, dass** der Schweißbrenner ein MIG/MAG-, WIG- oder Plasmabrenner oder ein Schweißbrenner mit umhüllter Elektrode ist.

4. Vorrichtung nach einem der vorhergehenden Ansprüche, **dadurch gekennzeichnet, dass** der dreiachsige Beschleunigungsmesser in dem Brenner integriert oder darauf angeordnet ist.

5. Vorrichtung nach einem der Ansprüche 1 bis 3, **dadurch gekennzeichnet, dass** der dreiachsige Beschleunigungsmesser in einer Schweißzange integriert oder darauf angeordnet ist.

6. Vorrichtung nach einem der vorhergehenden Ansprüche, **dadurch gekennzeichnet, dass** der dreiachsige Beschleunigungsmesser an dem Brenner oder an der Zange mittels eines Systems mit Befestigungsring befestigt ist.

7. Vorrichtung nach einem der vorhergehenden Ansprüche, **dadurch gekennzeichnet, dass** sie einen Schweißstromgenerator aufweist und die Signalverstärkungsmittel, die Signalverarbeitungsmittel, die Integrationsmittel und die Berechnungsmittel in dem Generator oder in einem Modul außerhalb des Generators angeordnet sind.

8. Vorrichtung nach einem der vorhergehenden Ansprüche, **dadurch gekennzeichnet, dass** die Signalverstärkungsmittel geeignet und ausgelegt sind, um das Stromsignal zu verstärken und zu linearisieren, das von dem dreiachsigen Beschleunigungsmesser abgegeben wird.

9. Verfahren zum Überwachen eines Lichtbogenschweißvorgangs mittels eines Lichtbogenschweißbrenners und eines Schweißstromgenerators, der den Brenner mit Strom versorgt, wobei nach den folgenden Schritten vorgegangen wird:
a) mit dem Schweißen mindestens eines metallischen Werkstücks mittels des Brenners beginnen,
b) Berechnen der linearen Schweißenergie aus mindestens einem Wert der Verschiebungsgeschwindigkeit des Brenners, der über einen bestimmten Zeitraum gemessen wird,
**dadurch gekennzeichnet, dass** vor dem Schritt b) ferner nach den folgenden Schritten vorgegangen wird:
c) Wiederherstellen mindestens eines Signals in Abhängigkeit von der Beschleunigung des Brenners entlang jeder Achse mittels eines dreiachsigen Beschleunigungsmessers (X, Y, Z),
d) Verstärken des Stromsignals, das von dem dreiachsigen Beschleunigungsmesser abgegeben wird,
e) Verarbeiten des verstärkten Stromsignals, um daraus Beschleunigungswerte abzuleiten, die der dreiachsige Beschleunigungsmesser entlang jeder Achse (X, Y, Z) erfährt,
f) Integrieren der Beschleunigungswerte während des bestimmten Zeitraums und daraus mindestens einen Wert der Verschiebungsgeschwindigkeit des Schweißbrenners ableiten.

10. Verfahren nach Anspruch 9, **dadurch gekennzeichnet, dass** es einen Schritt des Anzeigens und/oder Darstellens der Schweißenergie, die in Schritt f) berechnet wird, oder der Verschiebungsgeschwindigkeit des Schweißbrenners, die in Schritt e) bestimmt wird, aufweist.

11. Verfahren nach einem der Ansprüche 9 oder 10, **dadurch gekennzeichnet, dass** es einen Schritt des Warnens der Bedienperson aufweist, wenn die Schweißenergie, die in Schritt f) berechnet wird, oder die Verschiebungsgeschwindigkeit des Schweißbrenners, die in Schritt e) bestimmt wird, von den vorgegebenen Sollwerten abweicht.

12. Verfahren nach einem der Ansprüche 9 bis 11, **dadurch gekennzeichnet, dass** in dem Schritt c) das Stromsignal, das von dem dreiachsigen Beschleunigungsmesser abgegeben wird, verstärkt oder linearisiert wird.

## Claims

1. A welding device comprising:
- a torch for arc welding and
- calculation means making it possible to calculate the linear welding energy on the basis of at least one value of speed of movement of the torch measured over a given period of time,
**characterised in that** said welding device also comprises
- a triaxial accelerometer (X, Y, Z) able and designed to provide at least one signal as a function of the acceleration of the torch along each axis,
- signal amplification means able and designed to amplify the current signal provided by the triaxial accelerometer,
- signal processing means able and designed to process the amplified current signal and to deduce the acceleration values experienced by the triaxial accelerometer along each axis, and
- integration means making it possible to operate an integration, during said given period of time, of said acceleration values and to deduce said at least one value of speed of movement of the welding torch.

2. The device according to claim 1, **characterised in that** it comprises visualisation means making it possible to visualise the welding energy calculated by the calculation means.

3. The device according to either one of the preceding claims, **characterised in that** the welding torch is a torch of the MIG/MAG, TIG or plasma type or of the coated electrode type.

4. The device according to any one of the preceding claims, **characterised in that** the triaxial accelerometer is integrated or arranged on the torch.

5. The device according to any one of claims 1 to 3, **characterised in that** the triaxial accelerometer is integrated or arranged on a welding gun.

6. The device according to any one of the preceding claims, **characterised in that** the triaxial accelerometer is fixed to the torch or to the gun by means of a fixing ring system.

7. The device according to any one of the preceding claims, **characterised in that** it comprises a welding current generator and the means for amplifying the signal, the signal processing means, the integration means and the calculation means are arranged in said generator or in a module externally of said generator.

8. The device according to any one of the preceding claims, **characterised in that** the signal amplification means are able and designed to amplify and linearise the current signal provided by the triaxial accelerometer.

9. A method for tracking an arc welding operation by means of an arc welding torch and a welding current generator supplying said torch with current, wherein the following steps are performed:
a) starting to weld at least one metal part by means of the torch,
b) calculating the linear welding energy on the basis of at least one value of speed of movement of the torch, measured over a given period of time,
**characterised in that**, prior to step b), the following steps are also performed:
c) recovering at least one signal as a function of the acceleration of the torch along each axis by means of a triaxial accelerometer (X, Y, Z),
d) amplifying the current signal provided by the triaxial accelerometer,
e) processing the amplified current signal so as to deduce the acceleration values experienced by the triaxial accelerometer along each axis (X, Y, Z),
f) integrating, during said given period of time, the acceleration values and deducing said at least one value of speed of movement of the welding torch.

10. The method according to claim 9, **characterised in that** it comprises a step of visualisation and/or display of the welding energy calculated in step f) or of the speed of movement of the welding torch determined in step e).

11. The method according to either of claims 9 or 10, **characterised in that** it comprises a step of warning the operator when the welding energy calculated in step f) or the speed of movement of the torch determined in step e) differ from predetermined setpoint values.

12. The method according to any one of claims 9 to 11, **characterised in that** in step c) the current signal provided by the triaxial accelerometer is amplified and linearised.
